Europäisches Patentamt

European Patent Office

Office européen des brevets

(19)

(11) Veröffentlichungsnummer: **0 037 906**
**B1**

(12) **EUROPÄISCHE PATENTSCHRIFT**

(45) Veröffentlichungstag der Patentschrift: **28.08.85**

(21) Anmeldenummer: **81101846.4**

(22) Anmeldetag: **13.03.81**

(51) Int. Cl.⁴: **F 16 K 3/02**

(54) **Querabdichtung für Schieberplatten von Absperrschiebern.**

(30) Priorität: **14.03.80 DE 3009896**

(43) Veröffentlichungstag der Anmeldung:
**21.10.81 Patentblatt 81/42**

(45) Bekanntmachung des Hinweises auf die
Patenterteilung:
**28.08.85 Patentblatt 85/35**

(84) Benannte Vertragsstaaten:
**AT CH FR LI NL**

(56) Entgegenhaltungen:
**CH-A- 523 453·
DE-A-2 110 065
DE-A-2 506 140
DE-A-2 700 831
DE-U-7 408 360
FR-A-2 375 520
US-A-2 995 057
US-A-3 401 915**

**"GWF-Wasser/Abwasser" 120 Jahr. 1979, Heft 8
DE-Verlag R. Oldenbourg MÜNCHEN (DE)
"Erhard-ERU-Schieber"**

(73) Patentinhaber: **Johannes Erhard, H.
Waldenmaier Erben Süddeutsche
Armaturenfabrik GmbH & Co.
Postfach 1280
D-7920 Heidenheim (DE)**

(72) Erfinder: **Freitag, Emil
Am Hahnenschnabel 7/1
D-7920 Heidenheim (DE)**
Erfinder: **Maier, Heinz
Alleestrasse 5
D-7921 Nattheim (DE)**

(74) Vertreter: **Seeger, Wolfgang, Dipl.-Phys.
European Patent Attorney Bereiteranger 15
D-8000 München 90 (DE)**

Courier Press, Leamington Spa, England.

**Beschreibung**

Die Erfindung betrifft eine Querabdichtung für Schieberplatten von Absperrschiebern, welche in einer Aussparung des Schiebergehäuses einsetzbar ist, bestehend aus einem Elastomer-Profil, welches auf der der Schieberplatte zugewandten Seite eine Ausnehmung aufweist, in welcher ein PTFE-Dichtelement (PTFE=Polytetrafluoräthylen) enthalten ist, und welches das Dichtelement trägt und mit der der Schieberplatte zugewandten Seite gegen diese Schieberplatte drückt.

Bei einem aus der DE—A—25 06 140 bekannten Flachschieber ist als Querdichtung auf jeder Plattenseite je ein in der Mittelebene längs aufgeschlitzter elastischer Hohlstab vorgesehen, in dessen Hohlraum ein mittels eines Druckorgans beaufschlagbares, auf die Innenseite des Hohlstabes einen Druck ausübendes Druckübertragungselement eingebracht ist, welches aus einer Dichtmasse besteht. Da diese Dichtmasse von dem Druckorgan mit Druck beaufschlagt wird, preßt sie die der Schieberplatte benachbarten Hohlstabschenkel gegen die Schieberplatte. Diese Hohlstabschenkel, welche aus Gummi bestehen, bilden die Dichtlippen der Querabdichtung.

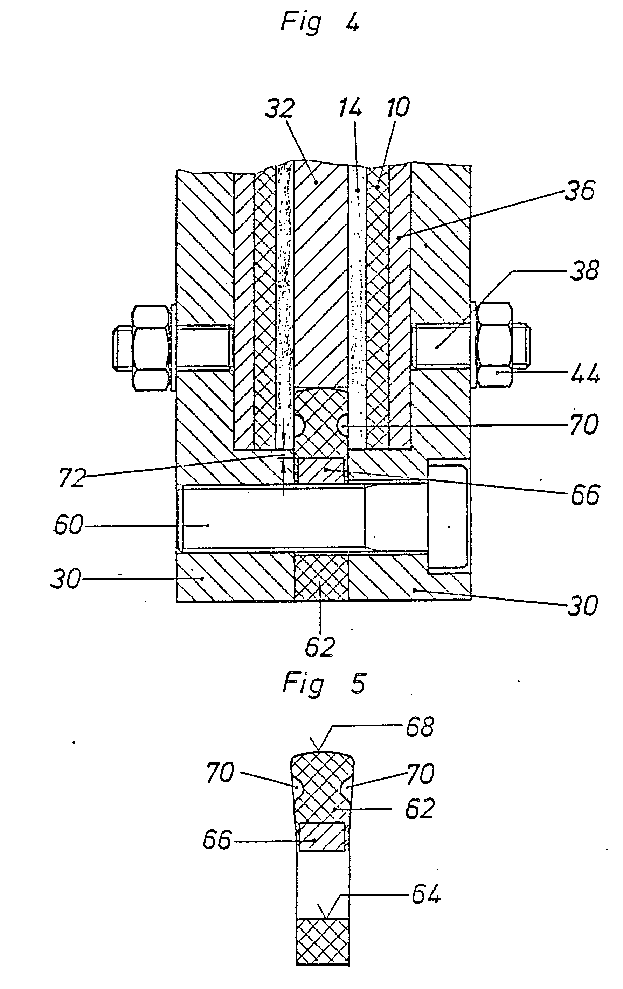

Die als Dichtlippen wirkenden Hohlstabschenkel oder Seitenteile öffnen sich um so mehr, je größer der Zwischenraum zwischen Hohlstab und Schieberplatte ist. Bei höheren Mediumsdrücken besteht die Gefahr, daß der Mediumsdruck den Druck der Dichtmasse überwindet und das Medium dann in das Innere des Hohlstabes hineindringt, dort Kavernen bildet und die Dichtmasse auslaugt. Um diese Gefahr zu vermeiden, ist gemäß dieser DE—A—25 06 140 vorgesehen, daß ein Teflonstreifen derart in jeden Hohlstab hineingeschoben wird, daß er den Längsschnitt und einen wesentlichen Teil der an ihn angrenzenden Innenwände bedeckt. Dieser Teflonstreifen ist im Vergleich zu seiner Breite sehr dünn; wie auf Seite 9 dieser Druckschrift ausdrücklich erwähnt ist, ist diese Dickenabmessung noch viel geringer als die auch bereits in der Zeichnung sehr dünn angegebene Abmessung. Unter dem Druck der Dichtmasse legt sich dieser Teflonstreifen formgerecht an die Innenwände des betreffenden Hohlstabes an und versperrt die Öffnung zwischen den als Dichtlippen wirkenden Rändern der Seitenwände. Ist jedoch der Mediumdruck sehr viel größer als der Druck der Dichtmasse, so kann das Medium trotzdem zwischen den Teflonstreifen und die Dichtlippen bis zur Dichtmasse eindringen. Aus Figur 4 und 5 der DE—A—25 06 140 ist ersichtlich, daß der Teflonstreifen die Dichtmasse nicht vollkommen umfaßt und somit die oben beschriebene Gefahr des Eindringens des Mediums, Kavernenbildung und Auslaugen der Dichtmasse weiterhin besteht.

Ein weiterer Nachteil des Teflonstreifens besteht darin, daß er in der Regel aus gesintertem Material besteht, relativ hart und somit nur schwer dehnbar ist.

Ferner wird der Teflonstreifen mit fast seiner gesamten Breite von innen an den Hohlraumschenkel des Hohlprofiles angepreßt, während nur ein ganz schmaler mittlerer Bereich den engen Spalt zwischen den Dichtlippen überbrückt und mit der Schieberplatte in Linienberührung kommt. Dadurch kann dieser Teflonstreifen auch bei beliebig hohem Druck, hervorgerufen durch die stirnseitig angebrachten Druckstifte auf die Druckmasse, nicht in Richtung auf die Schieberplatte hin durch den Spalt zwischen den Dichtlippen entscheidend herausgedrückt werden. Der Teflonstreifen kann deshalb maximal, wenn die Dichtlippen des aus Gummi bestehenden Hohlprofils sehr spitz zum Schlitz hin auslaufen, die Schieberplatte leicht berühren. Dabei würde er die in eine schmale Kante zum Schlitz hin auslaufenden, aus Gummi bestehenden Dichtlippen noch stärker an die Schieberplatte anpressen. Diese bekannte Querdichtung weist somit den Nachteil auf, daß die Dichtwirkung größtenteils von den aus Gummi bestehenden, an die Schieberplatte angepreßten Dichtlippen übernommen wird. Durch den Druck der Dichtmasse über den Teflonstreifen werden diese Gummiteile noch stärker an die Schieberplatte gepreßt, wodurch relativ hohe Reibungskräfte durch den Kontakt von Gummi/Metall entstehen, so daß größere Kräfte zum Bewegen der Schieberplatte erforderlich sind als bei der Berührungsdichtung Teflon/Metall.

Ein weiterer Nachteil dieser bekannten Querabdichtung kann außerdem darin liegen, daß nach längerem Stillstand und bei Einwirkung von Druck und Temperatur zwischen der Schieberplatte und dem vorgespannten Gummimaterial aufgrund von Zusatzstoffen (Weichmacher, Kleber usw. im Gummi) eine Adhäsion stattfindet. Diese Adhäsion bewirkt zum einen, daß nach längerem Stillstand eine große Kraft zum Verschieben der Schieberplatte erforderlich ist und andererseits, daß bei diesem Verschieben nach langem Stillstand kleine Teilchen der Dichtlippe-Füllstoffe des Gummis (Ruß usw.)—an der Schieberplatte hängenbleiben, aus den Dichtlippen herausgerissen werden und damit die Dichtwirkung beeinträchtigen.

Aufgabe der Erfindung ist es, eine Querabdichtung zu schaffen, welche günstige Materialeigenschaften aufweist und so einsetzbar ist, daß sie mit starker elastischer Kraft gegen die Schieberplatte andrückbar ist.

Die Erfindung, wie sie in dem Anspruch 1 gekennzeichnet ist, löst die Aufgabe.

Besondere Ausführungsarten der Erfindung sind in den abhängigen Ansprüchen angegeben.

Die Erfindung weist den Vorteil auf, daß die PTFE-Schnur aufgrund der Vorspannung des Elastomer-Profils ständig elastisch gegen die Schieberplatte gedrückt wird. Die PTFE-Schnur ist nicht hart gesintert sondern elastisch, d.h. verformbar. Durch die PTFE-Schnur werden Unebenheiten der Schieberplatte, die sich sonst bei deren Verschiebung nachteilig auswirken würden, aufgefangen, ohne die Dichtwirkung zu verringern.

Ein weiterer Vorteil der Erfindung ist darin zu sehen, daß sowohl die gesamte Querabdichtung mit dem Elastomer-Profil als auch die PTFE-Schnur selber einfach einsetzbar und auswechselbar sind.

Ein weiterer Vorteil der Erfindung liegt darin, daß die PTFE-Schnur selber nur teilweise in der Ausnehmung des Elastomerprofils enthalten ist, daß sie also von diesem vorsteht. Beim Einbau in einen Schieber wird deshalb nur diese PTFE-Schnur selber gegen die Schieberplatte gedrückt, so daß das an der Schieberplatte anliegende Teil auch nach längerem Stillstand nicht an der Platte haftet, auch im vorgespannten Zustand nur geringe Reibungsbeiwerte aufweist, bei höheren Temperaturen an der Edelstahlplatte keine Ablagerungen hinterläßt und auch nach öfterem Nachspannen nicht verhärtet.

Die Ausnehmung in dem Elastomer-Profil ist zweckmäßigerweise kleiner als das Volumen der eingelegten PTFE-Schnur. Bei dieser Ausführungsform, bei der die Aussparung voll von einem Teil der PTFE-Schnur ausgefüllt ist, tritt eine besonders günstige Druckübertragung auf. Gleichzeitig gewährleistet diese Ausbildungsform die Nutzung der vollen Elastizität des Elastomer-Profils zum Andrücken der PTFE-Schnur gegen die Schieberplatte.

Das Elastomer-Profil kann mit seiner der Schieberplatte abgewandten Seite an einer Druckleiste oder Druckplatte anliegen. Diese Ausbildungsform weist den Vorteil auf, daß das Elastomer-Profil abgestützt ist und nicht in sich verwunden wird.

Das Elastomer-Profil weist zweckmäßigerweise Längswulste zum Ausgleich von Unebenheiten der Aussparung auf. Diese Längswulste können auf beiden Seiten, in Verschiebungsrichtung vor und hinter der PTFE-Schnur, vorgesehen sein.

Diese Weiterbildungen der Erfindung sind deshalb sehr zweckmäßig, weil Gehäuseteile gegossen werden und in der Aufnahmeaussparung Unebenheiten entstehen können, die ausgeglichen und dabei gleichzeitig abgedichtet werden müssen.

Die Druckleisten sind nach einer anderen Weiterbildung der Erfindung mit verstellbaren Schubstangen verbindbar ausgebildet. Diese Weiterbildung der Erfindung bringt den Vorteil mit sich, daß das Elastomer-Profil innerhalb der Aussparung, in welche es eingesetzt wird, verschiebbar ist, auch im Betrieb, und daß aufgrund der Arbeitsweise im Betrieb genau der gewünschte Andruck der PTFE-Schnur an die Schieberplatte eingestellt werden kann.

Das Elastomer-Profil kann auf der der Durchflußöffnung zugewandten Seite eine Längsnut zur Aufnahme eines Abstreifers aufweisen. Ein solcher Abstreifer schabt Ablagerungen von der Schieberplatte ab und hält sie weitgehend von der PTFE-Schnur fern.

Auch auf der dem Schieberkopf zugewandten Seite des Elastomer-Profils kann eine Längsnut zur Aufnahme eines auf die Schieberplatte andrückenden Streifens ausgebildet sein. Dieser Streifen kann zusammen mit dem Abstreifblech eine Kammer bilden, in welcher ein Schmiermittel enthalten sein kann.

Aufgabe der Erfindung ist es ferner, Schieber mit in Aussparungen des Gehäuses angeordneten Querdichtungen zu schaffen, deren Querdichtungen günstige Materialeigenschaften aufweisen und die so einsetzbar sind, daß die Querdichtung mit starker elastischer Kraft gegen die Schieberplatte angedrückt wird.

Diese Aufgabe ist gemäß der Erfindung gelöst durch einen Absperrschieber mit mindestens einer Querabdichtung gemäß einem der Ansprüche 1 bis 6.

Eine solche Querdichtung ist auf beiden Seiten der Schieberplatte angeordnet. Das Elastomer-Profil dieses Schiebers kann mit seiner der Schieberplatte abgewandten Seite an einer Druckleiste oder Druckplatte anliegen. Diese Unterstützung des Elastomer-Profils verhindert eine Verbiegung oder Verkippung desselben und bewirkt, daß dessen volle Elastizitätskraft zum Andruck der PTFE-Schnur gegen die Schieberplatte ausgenutzt wird. Diese Druckleisten können nach einer anderen Weiterbildung der Erfindung mit verstellbaren Schubstangen verbindbar ausgebildet sein. Diese Weiterbildung der Erfindung ermöglicht es, die Querdichtungen in den Aussparungen so zu verschieben, daß sie die PTFE-Schnur mit dem gewünschten Druck gegen die Schieberplatte andrücken. Diese Einstellung kann auch während des Betriebs durchgeführt werden. Gleichzeitig ermöglicht diese Weiterbildung der Erfindung ein Nachstellen oder ein Nachspannen der Querdichtung.

Zweckmäßigerweise weist das Elastomer-Profil Längswulste zum Ausgleich von Unebenheiten der Aussparung auf. Diese Längswulste können an zwei gegenüberliegenden Seiten oder auch umlaufend um das Elastomer-Profil ausgebildet sein.

Zweckmäßigerweise kann das Elastomer-Profil auf der der Durchflußöffnung zugewandten Seite eine Längsnut zur Aufnahme eines Abstreifers aufweisen. Letzterer streift Ablagerungen von der Schieberplatte ab und hält sie auf diese Weise von der PTFE-Schnur fern.

Das Elastomer-Profil kann auch auf der dem Schieberkopf zugewandten Seite eine Längsnut zur Aufnahme eines an die Schieberplatte andrückenden Streifens aufweisen. Dieser Streifen, der zweckmäßigerweise aus einem dünnen, harten und elastischen Material besteht, bildet zusammen mit dem Abstreifer eine Kammer, in welcher ein Schmiermittel enthalten sein kann.

Die Querdichtung erstreckt sich mit ihren beiden Enden zweckmäßigerweise bis über einen Abschnitt der seitlichen Stirnflächendichtungen. Falls letztere eine Verstärkungseinlage, z.B. aus Stahl, enthalten, endet die Querdichtung vorteilhafterweise vor dieser.

Weitere Vorteile und Merkmale der Erfindung gehen aus den Ansprüchen in Verbindung mit der Zeichnung und der Beschreibung hervor. Im einzelnen zeigen:

Fig. 1 einen Querschnitt durch ein Elastomer-Profil,

Fig. 2 einen Querschnitt durch das Elastomer-Profil der Fig. 1, jedoch mit eingesetztem PTFE-Dichtprofil,

Fig. 3 einen Querschnitt durch die erfindungsgemäße Dichtung in eingebautem Zustand,

Fig. 4 einen Längsschnitt durch die erfindungsgemäße Querdichtung mit dem Übergang zu der stirnseitigen Dichtung, in eingebautem Zustand,

Fig. 5 einen Schnitt durch die in Fig. 4 dargestellte Stirnflächendichtung.

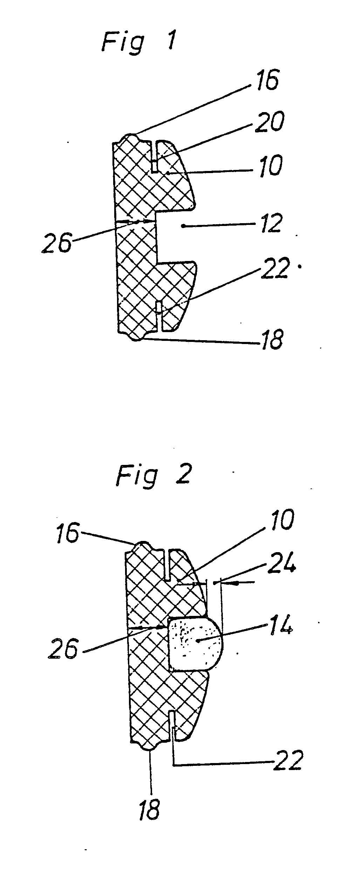

In Fig. 1 ist ein Querschnitt durch ein Elastomer-Profil 10 dargestellt. Dieses weist auf seiner rechten Seite eine Nut 12 auf, welche zur Aufnahme eines PTFE-Dichtprofils 14 vorgesehen ist, vergleiche Fig. 2.

An seinem oberen Ende weist das Elastomer-Profil 10 einen Wulst 16 auf, und an seinem unteren Ende ist ein Wulst 18 ausgebildet. Diese beiden Wulste dienen zur Ausgleichung von Unebenheiten in der Aussparung des Schiebergehäuses, in welche das Elastomer-Profil eingesetzt werden soll.

Ferner weist das Elastomer-Profil 10 sowohl in seiner Oberseite als auch in seiner Unterseite je eine schmale Nut 20 bzw. 22 auf, welche zur Aufnahme von Abstreifblechen dienen, wie es weiter unten noch beschrieben werden wird.

Die Fig. 2 zeigt den gleichen Schnitt durch ein Elastomer-Profil 10, jedoch mit einem eingesetzten PTFE-Dichtprofil. Wie man in dieser Fig. 2 sieht, ist die gesamte Nut 12, welche sich über die ganze Länge des Elastomer-Profils 10 erstreckt, von dem PTFE-Profil ausgefüllt. Dieses Profil 14 steht um einen Abstand 24 von dem der Schieberplatte am nächsten gelegenen Teil des Elastomer-Profils 10 vor.

Das Elastomer-Profil 10 bildet somit ein Trägerprofil, welches das Dichtprofil selber trägt und hält. Die Dicke 26 des Elastomer-Profils hinter der PTFE-Schnur 14 übt nur die Funktion der elastischen Andrückung aus.

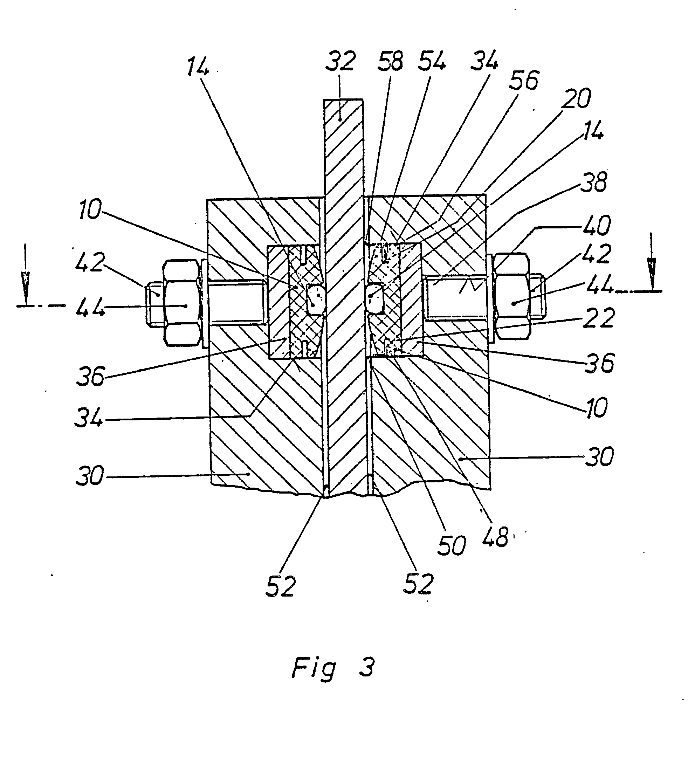

Die Fig. 3 zeigt einen Schnitt durch einen Flachschieber, in welchem das erfindungsgemäße Dichtbauteil 10, 14 eingesetzt ist. Dieser Schnitt liegt senkrecht zur Schieberplatte 32 in Verschiebungsrichtung derselben. In dieser Figur sieht man die beiden Gehäusehälften 30, zwischen denen die Schieberplatte 32 angeordnet ist. Sowohl in der rechten als auch in der linken Gehäusehälfte 30 ist jeweils eine Aussparung 34 vorgesehen, in welcher das Elastomer-Profil 10 so angeordnet ist, daß es oben und unten dichtend an der Wand dieser Aussparung 34 anliegt. Hinter dem Elastomer-Profil 10 ist eine Druckplatte 36 in der Aussparung 34 angeordnet. Gegen die äußere oder Rückwand dieser Druckplatte 36 kann ein Schraubbolzen 38 einwirken, welcher zu diesem Zweck in eine Bohrung 40 hineingeschraubt ist. Auf dem aus der Gehäusehälfte 30 vorstehenden Abschnitt 42 des Schraubbolzens 38 ist eine Arretiermutter 44 aufgeschraubt.

Im Ausführungsbeispiel der Fig. 3 sind die Dicke des Elastomer-Profils 10 und der PTFE-Schnur 14 so bemessen, daß sie im unbelasteten Zustand zusammen die Tiefe der Aussparung 34 übertreffen. Die PTFE-Schnur 14 ist deshalb gegen die Schieberplatte 32 angedrückt. Mit Hilfe des Schraubbolzens 38 kann über die Druckplatte 36 das Dichtbauteil, welches aus dem Elastomer 10 und der PTFE-Schnur 14 besteht, beliebig nachgestellt werden. Nach dem Zusammenbau des Schiebers wird beim Prüfen auf Druck dieser Dichtsatz so weit gegen die Schieberplatte 32 vorgespannt, bis Dichtheit erreicht ist.

In der Nut 22 des Elastomer-Profils 10 kann ein abgewinkeltes Abstreifblech 48 eingesetzt werden. Dieses ist mit seinem vorderen Abschnitt 50, welcher in den Spalt 52, welcher durch die Schieberplatte 32 einerseits und die Gehäusehälfte 30 andererseits begrenzt wird, nach unten abgewinkelt und liegt an der Schieberplatte 32 an. Dieser Abstreifer 48, 50 streift beim Herausziehen der Schieberplatte 32 alle Ablagerungen von dieser ab und hält sie auf diese Weise von der PTFE-Schnur 14 fern. Der Abstreifer kann auch ohne Abwinkelungen, also gerade, ausgebildet sein. Ein dem Abstreifer 48, 50 ähnliches Element 54 steckt mit seinem abgewinkelten Abschnitt 56 in der oberen Nut 20. Auch dieses Element 54 weist einen abgewinkelten Abschnitt 58 auf, welcher auch elastisch federnd an der Schieberplatte 32 anliegt. Der Abstreifer 48, 50 und das ähnliche Element 54, 58 bilden zusammen mit der Oberfläche des Elastomer-Profils 10 und der Oberfläche der Schieberplatte 32 eine Kammer, in welcher ein Schmiermittel angeordnet sein kann. Diese Kammer wird durch die PTFE-Schnur 14 geteilt.

Die Fig. 4 zeigt einen Schnitt senkrecht zur Verschieberichtung der Schieberplatte 32 und quer durch diese hindurch. Dieser Schnitt erstreckt sich bis zu einer Seite des Schiebergehäuses 30.

Wie man in dieser Fig. 4 sieht, werden die beiden Gehäusehälften 30 durch Schrauben 60 zusammengehalten; diese Konstruktion ist bekannt und muß deshalb nicht näher beschrieben werden.

Zwischen den beiden Gehäusehälften 30 ist eine Stirnflächendichtung 62 eingesetzt, welche ein Loch 64 aufweist, durch welches die Schraube 60 hindurchgeführt sind. Dieses Dichtelement 62, welches in Fig. 5 nochmals im Schnitt dargestellt ist, enthält eine Stahleinlage 66.

In dem der Schieberplatte 32 zugewandten Bereich weist diese Stirnflächendichtung 62 einen zunehmenden Querschnitt auf, und die der Schieberplatte 32 zugewandte Seite 68 ist konvex ausgebildet, vergleiche Fig. 5. In dem Abschnitt vergrößerten Durchmessers sind rechts und links je eine Verdrängungsnut 70 ausgebildet.

Wie man in Fig. 4 sieht, erstreckt sich die Querdichtung über den inneren Bereich der U-förmigen Stirnflächendichtung 62. Die in Fig. 4 sichtbare, geschnittene PTFE-Schnur 14 erstreckt sich an jeder Seite der Schieberplatte 32 über den inneren Bereich der Stirnflächendichtung 62 über die Verdrängungsnuten 70 hinaus. Die Querdichtung endet jedoch noch vor der Stahleinlage 66. Das äußere Ende der Querdichtung weist von dem ihm zugewandten Ende der Stahleinlage noch einen Abstand 72 auf. Durch diese Ausführungsform ist sichergestellt, daß die Querdichtung lediglich auf dem elastisch verformbaren Abschnitt der Stirnflächendichtung 62 einwirkt, so daß stets eine gute Abdichtung gewährleistet ist.

**Patentansprüche**

1. Querabdichtung für Schieberplatten (32) von Absperrschiebern, welche in einer Aussparung (34) des Schiebergehäuses (30) einsetzbar ist, bestehend aus einem Elastomer-Profil (10), welches auf der der Schieberplatte (32) zugewandten Seite eine Ausnehmung (12) aufweist, in welcher ein Dichtelement aus Polytetrafluoräthylen enthalten ist, und welches das Dichtelement trägt und mit der der Schieberplatte zugewandten Seite gegen diese Schieberplatte (32) drückt, dadurch gekennzeichnet,

— daß das Dichtelement eine elastische, d.h. verformbare und nicht hart gesinterte Polytetrafluoräthylen-Schnur (14) ist,
— daß die Ausnehmung (12) im Elastomerprofil (10) ein kleineres Volumen als die eingelegte Polytetrafluoräthylen-Schnur (14) aufweist, so daß die Schnur nur teilweise in der Ausnehmung (12) enthalten ist, während der übrige Teil zur Schieberplatte (32) hiṅ vorsteht.

2. Querabdichtung nach Anspruch 1, dadurch gekennzeichnet, daß das Elastomer-Profil (10) mit seiner der Schieberplatte (32) abgewandten Seite an einer Druckleiste oder Druckplatte 36 anliegt.

3. Querabdichtung nach einem der Ansprüche 1—2, dadurch gekennzeichnet, daß das Elastomer-Profil (10) Längswulste (16, 17) zum Ausgleich von Unebenheiten der Aussparungen (34) der Gehäuseteile (30) aufweist.

4. Querabdichtung nach einem der Ansprüche 1—3, dadurch gekennzeichnet, daß das Elastomer-Profil (10) auf beiden Seiten in Verschiebungsrichtung der Schieberplatte (32) vor und hinter der PTFE-Schnur, Längsnuten (20, 22) zur Aufnahme eines an die Schieberplatte (32) andrückenden Abstreifers (54, 58) aufweist.

5. Querabdichtung nach einem der Ansprüche 3—4, dadurch gekennzeichnet, daß die Druckplatten (36) mit verstellbaren Schubstangen (38) verbindbar ausgebildet sind.

6. Querabdichtung nach Anspruch 5, dadurch gekennzeichnet, daß die Längsnut bzw. die Längsnuten (20, 22) im Bereich vor den Wulsten (16, 17) ausgebildet sind.

7. Absperrschieber mit mindestens einer Querabdichtung gemäß einem der Ansprüche 1 bis 6.

8. Schieber nach Anspruch 7, dadurch gekennzeichnet, daß auf beiden Seiten der Schieberplatte (32) eine Querabdichtung (10, 14) angeordnet ist.

9. Schieber nach einem der Ansprüche 7 oder 8, dadurch gekennzeichnet, daß die Querabdichtung (10, 14) sich mit ihren beiden Enden bis über einen Abschnitt der seitlichen Stirnflächendichtungen (62) erstreckt.

10. Schieber nach Anspruch 9, dadurch gekennzeichnet, daß die Querabdichtung vor einer Versteifungseinlage (66) in den seitlichen Stirnflächendichtungen (62) endet.

11. Schieber nach einem der Ansprüche 9 oder 10, dadurch gekennzeichnet, daß Abstreifer (48, 50, 54, 58) vor einer Versteifungseinlage (66) in den seitlichen Stirnflächendichtungen (62) enden.

**Revendications**

1. Garniture d'étanchéité transversale pour les tiroirs coulissants (32) de robinets-vannes, pouvant être insérée dans un logement (34) du boîtier (30) de la vanne, et constituée d'un profilé en élastomère (10) présentant sur sa face tournée vers le tiroir coulissant (32), un évidement (12) contenant un joint d'étanchéité en polytétrafluoréthylène, supporté par le profilé, et avec lequel la face tournée vers le tiroir coulissant presse contre ledit tiroir (32), caractérisée en ce que le joint d'étanchéité est un cordon (14) en polytétrafluoréthylène élastique, c'est à dire mou et déformable, et en ce que l'évidement (12) du profilé en élastomère (10) présente un volume plus petit que celui du cordon inséré (14), en polytétrafluoréthylène, de sorte que le cordon n'est contenu qu'en partie dans l'évidement (12), tandis que sa partie restante fait saillie vers le tiroir coulissant (32).

2. Garniture d'étanchéité transversale selon la revendication 1, caractérisée en ce que la face du profilé en élastomère (10) opposée au tiroir coulissant (32), appuie contre une barre de pression ou plaque d'appui (36).

3. Garniture d'étanchéité transversale selon l'une des revendications 1—2, caractérisée en ce que le profilé en élastomère (10) présente des bourrelets longitudinaux (16, 18), pour compenser les aspérités des logements (34) des pièces du boîtier (30).

4. Garniture d'étanchéité transversale selon l'une des revendications 1—3, caractérisée en ce que le profilé en élastomère (10) présente, sur ses deux faces situées en amont et en aval du cordon en PTFE, dans la direction du déplacement du tiroir coulissant (32), des rainures longitudinales (20, 22) pour la réception d'un racleur (54, 58) pressant contre le tiroir coulissant (32).

5. Garniture d'étanchéité transversale selon l'une des revendications 3—4, caractérisée en ce que les plaques d'appui (36) peuvent être reliées à des tiges de poussée (38), réglables.

6. Garniture d'étanchéité transversale selon la revendication 5, caractérisé en ce que la ou les rainures longitudinales (20, 22) sont formées dans une région située devant les bourrelets (16, 17).

7. Robinet-vanne comprenant au moins une garniture d'étanchéité transversale conforme à l'une des revendications 1 à 6.

8. Vanne selon la revendication 7, caractérisée en ce qu'une garniture d'étanchéité transversale (10, 14) est disposée des deux côtés du tiroir coulissant (32).

9. Vanne selon l'une des revendications 7 ou 8, caractérisée en ce que les deux extrémités de la garniture d'étanchéité transversale (10, 14) s'étendent au-delà d'une portion des garnitures d'étanchéité frontales (62) montées sur les côtés.

10. Vanne selon la revendication 9, caractérisée en ce que la garniture d'étanchéité transversale s'arrête avant un insert de renforcement (66) disposé dans les garnitures d'étanchéité frontales (62) montées sur les côtés.

11. Vanne selon l'une des revendications 9 ou 10, caractérisée en ce que des racleurs (48, 50, 54, 58) s'arrêtent avant un insert de renforcement (66) disposé dans les garnitures d'étanchéité frontales (62) montées sur les côtés.

**Claims**

1. A transverse seal for valve plates (32) of Gate Valves, which can be inserted in a recess (34) of the valve body (30) and consists of an Elastomer profile (10) having a recess (12) which contains a sealing element of polytetrafluor ethylene and supports the sealing element and presses against the valve plate (32) on the side adjacent to the valve plate, characterized in that

— the sealing element is a resilient, i.e. mouldable and not hard-sintered polytetrafluor ethylene cord (14),
— the volume of the recess (12) in the Elastomer profile (10) is smaller than that of the inserted polytetrafluor ethylene cord (14) so that the cord is only partially contained in the recess (12) while the remaining part is protruding towards the valve plate (32).

2. The transverse seal according to Claim 1, characterized in that the side of the Elastomer profile (10) opposite to the valve plate (32) fits close on a pressure pad or pressure plate (36).

3. The transverse seal according to any of the Claims 1 to 2, characterized in that the Elastomer profile (10) features longitudinal swellings (16, 17) for compensation of unevenness of the recesses (34) of the body parts (30).

4. The transverse seal according to any of the Claims 1 to 3, characterized in that the Elastomer profile (10) features longitudinal grooves (20, 22) on both sides in the direction of displacement of the valve plate (32) in front of and behind the PTFE cord for receiving a scraper (54, 58) pressing against the valve plate (32).

5. The transverse seal according to any of the Claims 3 to 4, characterized in that the pressure plates (36) are designed in such a way that they may be connected with adjustable push rods (38).

6. Transverse seal according to Claim 5, characterized in that the longitudinal groove and the longitudinal grooves respectively (20, 22) are formed in the zone of the swellings (16, 17).

7. Shut-off Gate Valve with a minimum of one transverse seal according to any of the Claims 1 to 6.

8. Gate Valve according to Claim 7, characterized in that one transverse seal (10, 14) is provided on both sides of the valve plate (32).

9. Gate Valve according to any of the Claims 7 or 8, characterized in that the transverse seal (10, 14) extends at both of its ends over part of the lateral face seals (62).

10. Gate Valve according to Claim 9, characterized in that the transverse seal ends in front of a stiffening insert (66) in the lateral face seals (62).

11. Gate Valve according to any of Claims 9 or 10, characterized in that the scrapers (48, 50, 54, 58) end in front of a stiffening insert (66) in the lateral face seals (62).

Fig 1

Fig 2

Fig 3

## Fig 4

## Fig 5